# DEMANDE DE BREVET EUROPEEN

(11) **EP 1 538 012 A2**
(43) Date de publication de la demande: **08.06.2005**
(21) Numéro de dépôt: 04364074.7
(22) Date de dépôt: 03.12.2004
(51) Int. Cl.: B60J 7/00

(54) **Dispositif d'obturation d'une ouverture pour véhicule automobile, procédé de fabrication et véhicule correspondant.**

(30) Priorité: 16.04.2004 FR 0404067 E; 31.12.2003 FR 0315649 E; 05.12.2003 FR 0314326 E
(71) Demandeur: WAGON SAS, 79302 Bressuire Cédex (FR)
(72) Inventeur: Neaux, Jean-Claude, 79300 Terves (FR)
(74) Mandataire: Bioret, Ludovic

(57) **Abrégé**

L'invention concerne un dispositif d'obturation d'une ouverture pour véhicule comprenant deux panneaux (11, 12) superposés et solidarisés l'un à l'autre, définissant un espace intérieur au moins partiellement fermé, et des moyens d'occultation mobiles (14), pouvant s'étendre dans ledit espace fermé.

## Description

Le domaine de l'invention est celui de l'automobile, et plus précisément des surfaces vitrées, notamment de grandes dimensions, pour des véhicules automobiles. Ainsi, l'invention concerne les dispositifs d'obturation d'une ouverture ménagée dans un véhicule, leur réalisation et leur montage.

Une telle baie peut notamment être aménagée au niveau du toit du véhicule, de la vitre arrière, des vitres latérales, ... En d'autres termes, l'invention concerne les pavillons vitrés, ou plus généralement transparents ou translucides, les vitres de custode, les vitres de portes arrière ou latérales, les pare-brise, les hayons... et le cas échéant leur combinaison.

Le terme « ouverture » doit donc ici être interprété dans un sens large d'emplacement prévu sur le véhicule pour recevoir un tel dispositif. Il englobe également, le cas échéant, la surface correspondant classiquement à plusieurs ouvertures, et par exemple l'ensemble correspondant à un pavillon et une lunette arrière.

Une tendance actuelle du design automobile est de proposer de plus en plus de surfaces vitrées dans les véhicules, notamment pour des raisons de confort, d'esthétique et d'ergonomie. Ainsi, en particulier, on prévoit souvent un pavillon partiellement ou intégralement transparent. Dans certains cas, le pare-brise et/ou la vitre de custode forment un prolongement transparent de ce pavillon.

Ces pavillons, de même que les autres surfaces vitrées, sont réalisés dans des verres spéciaux. Ils sont souvent peu aisés à fabriquer, notamment lorsque la surface est importante et non plane. C'est par exemple le cas de nombreux pavillons en verre, qui présentent au moins un double galbe, longitudinalement et latéralement, voire des galbes variables.

Ces pavillons en verre sont par ailleurs très lourds, ce qui va à l'encontre des attentes des constructeurs automobiles, qui souhaitent toujours réduire le poids total du véhicule, et abaisser le centre de gravité de ce dernier. Ils sont en outre relativement fragiles.

Par ailleurs, le montage d'un tel pavillon n'est pas aisé, et doit être suivi d'un nombre élevé d'opérations chez le constructeur, pour installer tous les équipement associés au pavillon, tels que par exemple un éclairage, une garniture de finition ou un store d'occultation.

En ce qui concerne ce dernier point, il convient en effet de noter que la présence d'un store, ou d'un autre type d'occultant, est nécessaire, puisqu'il faut bien sûr pouvoir, dans certains cas, occulter au moins en partie la surface vitrée, par exemple pour se protéger du soleil.

On a déjà proposé de nombreux types de stores de pavillon, qui sont généralement complexes.

En effet, il est nécessaire de guider et maintenir le store dans une position horizontale, sans qu'il poche (pour des raisons d'esthétique et d'ergonomie évidentes), et préférentiellement qu'il suive la courbure du pavillon, de façon à libérer au maximum l'espace intérieur disponible. Pour obtenir ce résultat, on équipe généralement le rideau du store de baleines, qui vont le maintenir dans la position souhaitée.

La mise en oeuvre de telles baleines rend la réalisation et la mise en oeuvre du store relativement complexes et lourdes. En outre, cette approche génère un encombrement important lors du repliement du store (l'encombrement des baleines venant s'ajouter à celui de la toile), alors qu'il est toujours souhaité que l'espace à l'intérieur du véhicule reste le plus important possible. Cela est en particulier vrai au niveau du pavillon.

L'invention a notamment pour objectif de pallier ces différents inconvénients de l'état de l'art.

Plus précisément, un objectif de l'invention est de fournir une technique d'obturation d'une ouverture (correspondant par exemple à un pavillon ou à une vitre arrière) d'un véhicule, qui soit simple et efficace à mettre en oeuvre, tant sur le plan de la fabrication du dispositif (par exemple chez un sous-traitant) que sur le plan de son montage sur un véhicule (par exemple chez un constructeur).

Ainsi, notamment, un objectif de l'invention est de fournir une telle technique permettant de simplifier de façon importante le nombre d'opérations réalisées par le constructeur lors du montage, et donc de réduire les coûts de production correspondants.

Un autre objectif de l'invention est également de simplifier, chez le constructeur, le montage et l'ajustement des différents équipements associés aux dispositifs.

L'invention a également pour objectif de fournir une telle technique, qui permette de réduire le poids et l'encombrement des dispositifs d'obturation et de leurs équipements associés. Notamment, un objectif de l'invention est de fournir une telle technique, permettant de maximiser l'espace libre au voisinage d'un pavillon, même lorsque des moyens d'occultation sont déployés.

Selon un aspect particulier de l'invention, un autre objectif est de fournir une telle technique permettant de simplifier la mise en oeuvre de moyens d'occultation, et de rendre plus efficace ces derniers, tout en réduisant le poids et l'encombrement, notamment en position repliée.

Ces objectifs, ainsi que d'autres qui apparaîtront plus clairement par la suite, sont atteints selon l'invention à l'aide d'un dispositif vitré pour véhicule, comprenant deux panneaux superposés et solidarisés l'un à l'autre, définissant un espace intérieur au moins partiellement fermé, et des moyens d'occultation mobiles, pouvant s'étendre dans ledit espace fermé.

Ainsi, selon l'invention, on remplace un panneau vitré classique par un assemblage de deux panneaux, entre lesquels un occultant peut être déployé. On obtient ainsi un système efficace, dans lequel l'occultant est protégé et guidé. En outre, il n'y a ainsi plus de réduction de l'espace disponible, lorsque l'occultant est déployé.

Selon un mode de réalisation avantageux, lesdits panneaux sont galbés, et impriment un galbe correspondant auxdits moyens d'occultation, lorsque ceux-ci sont déployés.

Il n'est donc plus nécessaire, selon l'invention, de prévoir des baleines et autres éléments de guidage indépendants pour une toile de store, ou un autre élément souple. En effet, les moyens d'occultation sont simplement et directement mis dans la forme souhaitée par la couche inférieure, sur laquelle ils prennent appui.

Cette approche permet en outre de réduire le poids et l'encombrement des moyens d'occultation, tout en obtenant un résultat plus efficace, en termes de mise en place.

De façon préférentielle, au moins un desdits panneaux intègre au moins un élément technique assurant ou participant à une fonction technique distincte de la fonction principale d'obturation.

La structure en deux panneaux permet en effet de prévoir sur les dispositifs directement plusieurs fonctions techniques, ce qui n'est pas possible avec un panneau vitré classique.

Ainsi, selon un aspect avantageux de l'invention, au moins un desdits panneaux comprend des moyens de guidage desdits moyens d'occultation.

Préférentiellement, le dispositif comprend également des moyens de filtrage et/ou de ventilation, destinés à filtrer et/ou ventiler l'air présent dans ledit espace fermé.

Cela permet notamment d'éviter la condensation à l'intérieur de ce logement.

Le dispositif d'obturation de l'invention peut encore avantageusement intégrer au moins un des éléments techniques appartenant au groupe comprenant :
- des moyens de réception et/ou de fixation d'un élément d'étanchéité ;
- des moyens de réception et/ou de fixation de moyens de filtrage et/ou de ventilation ;
- des moyens de réception et/ou de fixation d'une barre de galerie, ou de moyens coopérant avec une telle barre de galerie ;
- des enjoliveurs de gouge ;
- un parcours de collage ;
- un parcours de câble ;
- des moyens de réception et/ou de fixation d'un jonc de finition ;
- un jonc de finition ;
- des moyens de réception et/ou de fixation de moyens d'éclairage ;
- des moyens de réception et/ou de fixation de moyens de motorisation de moyens d'occultation ;
- des capteurs, notamment de pluie, de température et/ou d'ensoleillement ;
- des moyens de réception et/ou de fixation d'une antenne et/ou d'un élément de carrosserie ;
- des antennes ;
- des moyens de dégivrage et/ou de chauffage et/ou de climatisation ;
- des moyens de réception d'un gaz ou de cristaux liquides ;
- des moyens de centrage et/ou de solidarisation desdits panneaux ;
- des moyens d'isolation phonique et/ou thermique ;
- des moyens de centrage et/ou de solidarisation dudit dispositif audit véhicule ;
- des moyens d'étanchéité entre ledit dispositif et ledit véhicule ;
- des moyens de contrôle et de commande des éléments intégrés audit dispositif ;
- des moyens essuie-glace ;
- des feux d'éclairage ;
- des moyens de réception d'une garniture intérieure dudit véhicule.

On comprend que l'invention permet donc de réaliser aisément des dispositifs pré-équipés (la liste des équipements ci-dessus n'étant pas limitative), que les constructeurs peuvent directement rapporter sur les véhicules.

De façon préférentielle, le dispositif porte également un joint encapsulé, un joint collé et/ou un joint de coulisse.

Selon un mode de réalisation avantageux, lesdits panneaux définissent chacun une demie-coquille, obtenue par exemple par moulage, surmoulage, thermoformage ou extrusion.

Le ou lesdits éléments techniques sont alors avantageusement obtenus simultanément avec le panneau correspondant, par moulage, surmoulage, thermoformage ou extrusion, de façon que chaque panneau forme une pièce unique, intégrant le ou lesdits éléments techniques.

Selon un aspect avantageux de l'invention, au moins un desdits panneaux présente au moins une zone opaque et/ou de couleur, destinée en particulier à dissimuler un ou plusieurs desdits éléments techniques.

Selon un mode de réalisation particulier de l'invention, le dispositif comprend un panneau extérieur (également appelé couche « design » par la suite) et un panneau intérieur (également appelé couche « technique), lesdits éléments techniques étant principalement associés audit panneau intérieur.

Avantageusement, au moins une zone opaque et/ou de couleur est formée sur ledit panneau extérieur. Bien sûr, le panneau intérieur peut également présenter de telles zones.

Selon un mode de réalisation préférentiel de l'invention, lesdits panneaux sont réalisés en matière plastique.
Cela permet de réduire fortement le poids de l'ensemble, et d'obtenir efficacement les différentes fonctions techniques, lors de la fabrication de chaque panneau.

De façon préférentielle, au moins un desdits panneaux présente un revêtement offrant au moins une des protections appartenant au groupe comprenant :
- les protections anti-rayures et/ou anti-chocs ;
- les protections contre les ultra-violets ;
- les protections contre le vieillissement ;
- les protections climatiques.

Les dispositifs selon l'invention peuvent notamment être destinés à au moins l'un des éléments appartenant au groupe comprenant :
- les pavillons ;
- les vitres arrière ;
- les vitres latérales ;
- les pare-brise ;
- les hayons.

Selon un mode de réalisation particulier de l'invention, le dispositif d'obturation peut comprendre des moyens permettant un déplacement par rapport au châssis dudit véhicule.

Ces moyens permettant un déplacement peuvent notamment comprendre au moins une charnière.

Cette approche peut en particulier s'appliquer à une lunette arrière de véhicule.

Selon un aspect particulier de l'invention, on peut regrouper au moins deux dispositifs d'obturation, pour former un module d'obturation. Dans un tel module, les dispositifs sont liés l'un à l'autre par au moins un élément de structure.

De façon avantageuse, au moins un desdits éléments de structure comprend des moyens de liaison au châssis dudit véhicule.

Dans un mode de réalisation de l'invention, un premier desdits dispositifs correspond à un pavillon et un second desdits dispositifs correspond à une lunette arrière.

Avantageusement, chacun desdits dispositifs d'obturation comprend des moyens d'occultation.

Un tel module peut également comprendre un pare-brise, par exemple en verre.

De façon avantageuse, un tel module comprend une garniture intérieure, recouvrant au moins partiellement une zone de liaison entre lesdits dispositifs d'obturation.

Préférentiellement, ladite garniture recouvre les logements de deux stores d'occultation, associés respectivement à deux desdits dispositifs d'obturation. Ladite garniture intérieure intègre de façon avantageuse au moins une fonction supplémentaire, telle que :
- un éclairage intérieur ;
- un ou plusieurs rangements.

L'invention concerne également le procédé de fabrication d'un dispositif ou d'un module d'obturation tel que décrit ci-dessus. Un tel procédé comprend notamment les étapes suivantes :
- obtention de deux panneaux;
- obtention de moyens mobiles d'occultation ;
- solidarisation desdits moyens mobiles d'occultation à au moins un desdits panneaux ;
- superposition et solidarisation desdits panneaux, pour former ledit dispositif d'obturation, lesdits panneaux définissant un espace au moins partiellement fermé.

Lesdits panneaux sont avantageusement obtenus par moulage, surmoulage, thermoformage ou extrusion.

Préférentiellement, ladite étape d'obtention comprend l'intégration d'au moins un élément technique assurant ou participant à une fonction technique distincte de la fonction principale d'obturation.

Notamment, le ou lesdits éléments techniques peuvent comprendre des moyens de filtrage et/ou de ventilation.

De façon avantageuse, ledit procédé de fabrication comprend une étape de pré-assemblage d'au moins un desdits éléments techniques sur au moins un desdits panneaux, avant ladite étape de superposition et solidarisation.

Ladite solidarisation peut par exemple être réalisée par boutrollage, rivetage, soudure, vissage et/ou collage.

Ainsi, selon l'invention, ledit dispositif d'obturation peut être rapporté sur ledit véhicule et solidarisé à celui-ci sous la forme d'une pièce unique pré-équipée.

Il n'y a donc qu'une seule opération, très simple, à effectuer chez le constructeur.

De façon préférentielle, la solidarisation audit véhicule est étanche, par l'intermédiaire de colle et/ou d'au moins un joint d'étanchéité solidaire dudit dispositif d'obturation.

Cette solidarisation audit véhicule peut notamment se faire par vissage, collage et/ou soudage.

L'invention concerne également les véhicules automobiles comprenant au moins un dispositif ou un module tel que décrit ci-dessus.

D'autres caractéristiques et avantages de l'invention apparaîtront à la lecture de la description suivante d'un mode de réalisation préférentiel de l'invention, donné à titre de simple exemple illustratif et non limitatif, et des dessins annexés parmi lesquels :
- la figure 1 présente une vue, en éclaté, d'un dispositif d'obturation selon un mode de réalisation particulier de l'invention ;
- la figure 2 présente une vue partielle du dispositif assemblé de la figure 1, en section latérale, monté sur un véhicule automobile ;
- la figure 3 présente, en coupe, un premier mode de mise en oeuvre d'un store à enrouleur sur un dispositif selon l'invention ;
- la figure 4 illustre un autre mode de mise en oeuvre, motorisé, d'un store sur un dispositif selon l'invention ;
- la figure 5 est un organigramme simplifié du procédé de fabrication et de montage du dispositif de la figure 1 ;
- la figure 6 illustre un module d'obturation, comprenant deux dispositifs d'obturation selon l'invention, assemblés l'un à l'autre.

L'invention concerne donc une nouvelle approche des dispositifs d'obturation (tels que des pavillons vitrés, des vitres latérales, arrière ou avant, d'un véhicule) destinés aux véhicules automobiles. Le mode de réalisation décrit par la suite concerne un pavillon vitré. Il apparaît clairement que la même approche peut être mise en oeuvre pour d'autres vitres dans un véhicule.

Comme déjà expliqué, dans les dispositifs connus, et notamment les pavillons vitrés, on prévoit généralement des moyens d'occultation, classiquement sous la forme d'un ou plusieurs stores à enrouleur, dont l'actionnement peut être manuel ou motorisé. Les pavillons de types connus sont réalisés en verre, et les stores se déploient à l'intérieur du véhicule, le long de ce pavillon. Ils peuvent être équipés de baleines, pour suivre au plus près la forme du pavillon.

L'approche nouvelle et inventive de l'invention repose notamment sur la mise en oeuvre de deux panneaux, ou deux couches, pour former le pavillon, ou une autre vitre. Le store, ou plus généralement l'occultant, est monté de façon qu'il s'étende entre les deux couches, dans un espace prévu à cet effet. Il est ainsi aisé de guider et conformer le store, sans qu'il soit nécessaire de prévoir des baleines ni de rails de guidage rapportés. En outre, le store ne s'étend pas à l'intérieur du véhicule, et ne réduit donc pas l'espace intérieur.

L'invention ne se limite pas au cas où un seul occultant est mis en oeuvre. Pour un pavillon, on peut ainsi prévoir deux occultants parallèles, pour les côtés gauche et droite du véhicule (comme on le verra par la suite, il est aisé de former les moyens de guidage adéquats).

On peut également prévoir des stores distincts pour les parties avant et arrière du véhicule. Dans ce cas, on peut prévoir que le pavillon présente une partie technique centrale, séparant deux parties transparentes. Les stores avant et arrière sont avantageusement logés dans cette partie technique.

Préférentiellement, les deux couches sont réalisées en matière plastique, telle que du polycarbonate, ce qui permet d'une part de réduire le poids du pavillon, et d'autre part d'y intégrer, par exemple par moulage ou surmoulage, plusieurs fonctions techniques complémentaires, permettant de simplifier et d'optimiser la fabrication et la mise en oeuvre d'un tel pavillon.

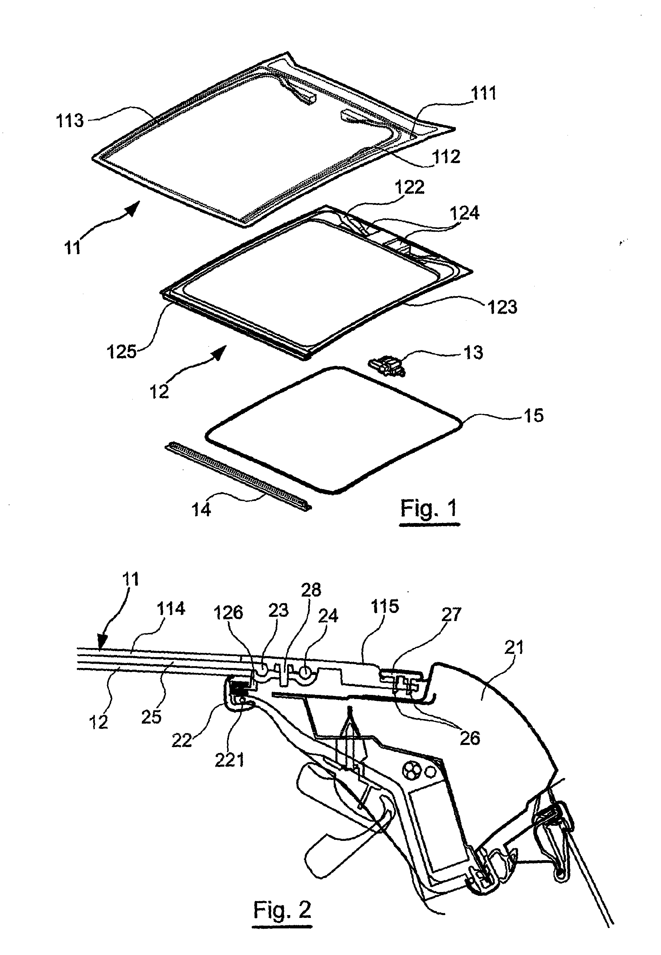

Comme cela apparaît sur la figure 1, le pavillon, également appelé module, est constitué de deux couches, une couche tournée vers l'extérieur, appelée couche « design » 11, et une couche tournée vers l'intérieur du véhicule, appelée couche « technique » 12.

Selon le mode de réalisation illustré sur cette figure 1, la couche de design 11, réalisée en polycarbonate, intègre quelques fonctions techniques, et notamment :
- un parcours de collage 111 ;
- des fixations d'enjoliveurs de gouge 26 ;
- deux demi-parcours de câbles 112 et 113 pour l'entraînement du store ;
- ...

Cette couche peut comprendre une zone transparente, correspondant essentiellement à la zone centrale, et une zone opaque et/ou de couleur, destinée à dissimuler les fonctions techniques (et recouvrant donc notamment les éléments 111, 112 et 113).

La couche technique 12, également réalisée en polycarbonate, peut quant à elle être intégralement ou sur sa plus grande partie, transparente. Elle intègre un nombre élevé de fonctions techniques, telles que :
- deux demi-parcours de câbles 121 et 122, complémentaires des demi-parcours 112 et 113 ;
- des moyens de fixation d'un jonc de fixation pour la garniture (non représenté) ;
- des moyens de fixation 124 d'un moteur 13 pour l'entraînement du store ;
- des moyens de réception 125 d'un dispositif d'occultation 14, par exemple un store à enrouleur ;
- des parcours de colle module/caisse, permettant notamment de faciliter l'application sur la chaîne de montage ;
- ...

Un jonc de finition 15 est placé sur la couche 12. Une fonction technique complémentaire peut être la présence de moyens de réception et de maintien de ce jonc de finition.

Comme on le verra par la suite, le montage du pavillon de l'invention est très simple. Il suffit d'installer les différents éléments correspondant aux fonctions techniques sur l'un des panneaux, puis de solidariser entre eux les deux panneaux. Par exemple, on rapporte l'occultant 14, le moteur 13 et les câbles d'entraînement reliant ces deux éléments sur la couche technique 12. On peut également y rapporter différents autres éléments, tels que le jonc de finition 15 et d'autres éléments, qui seront listés par la suite. On assemble ensuite les deux couches 11 et 12, par exemple par collage ou bouterollage.

On dispose alors d'un pavillon vitré prêt à être monté directement sur un véhicule, et préalablement équipé des différentes fonctions techniques. Le constructeur n'a donc qu'à placer sur le châssis du véhicule ce pavillon, sans devoir rapporter ensuite les autres éléments, tels que l'occultant, et donc sans avoir non plus à effectuer les différentes fixations et les différents réglages nécessaires pour toutes ces fonctions techniques.

La figure 2 illustre un exemple, en coupe, d'un tel pavillon, monté sur le véhicule.

On distingue, sur cette figure 2, les deux couches 11 et 12, formant le pavillon, dont le bord latéral est rapporté sur un élément 21 du châssis. Une solidarisation rapide et simple au châssis est obtenue, par collage au niveau des éléments 28. Bien entendu, d'autres modes de fixation à ce châssis, tel que le vissage, peuvent être envisagés sans sortir du cadre de l'invention.

Le jonc 22, qui peut être moulé dans le panneau technique, retient la garniture 221.

On notera sur cette figure différentes autres fonctions techniques qui ont été intégrées à l'un et/ou à l'autre des deux couches, et notamment les chemins de câbles 24 et 25, les moyens de réception 26 de l'enjoliveur de gouge 27, et des moyens 28 d'aide à l'assemblage des deux couches, la couche de design comprenant un élément mâle venant s'inscrire dans un logement correspondant de la couche technique (avant collage).

On distingue enfin, sur cette figure 2, l'espace 29 à l'intérieur duquel se déploie la toile d'occultation, et on comprend que le galbe de ce logement sera directement appliqué à la toile. Enfin, on notera la portion transparente 114 et la portion opaque 115 de la couche design 11.

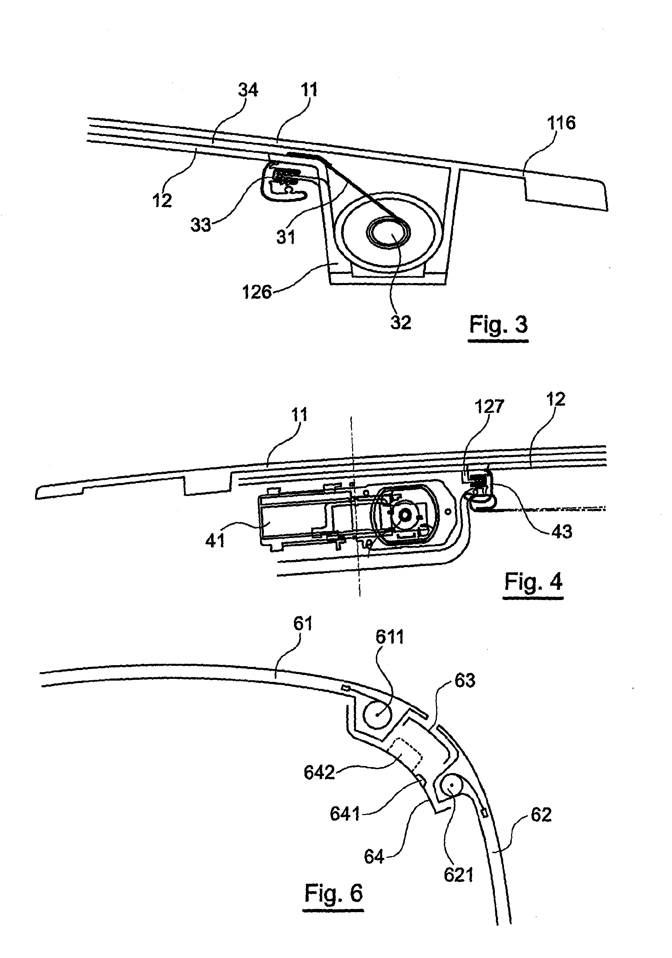

Sur la figure 3, on a représenté, en coupe, la partie arrière du pavillon vitré. Il peut également s'agir, selon les modes de réalisation, de la partie avant, si l'enrouleur est placé de l'autre côté.

On note ici que la couche technique 12 présente à son extrémité un logement 126, prévu pour recevoir l'occultant 14, ici sous la forme d'un store à enrouleur, présentant une toile 31 enroulée sur un tube 32.

La couche de design 11 vient recouvrir ce logement 126, et se prolonge légèrement (116) vers l'arrière, par exemple sur une zone prévue pour venir prendre appui sur un élément du châssis.

L'extrémité libre de la toile 31 est associée à une barre de tirage, qui permet de déployer cette toile à l'intérieur du logement 34 formé entre les couches 11 et 12. Une fonction technique intégrée au panneau 12 consiste à prévoir les moyens de guidage de cette barre de tirage.

Le déploiement du store peut donc être manuel, à l'aide de cette barre de tirage 33, ou motorisé, comme illustré sur les figures. Cependant, même dans ce dernier cas, on peut prévoir, au moins à titre de dépannage, des moyens de déploiement et de repliement manuels.

Sur la figure 4, on a représenté, en coupe, la mise en place du moteur 13 dans un logement prévu à cet effet dans la couche technique 12, et défini notamment par les éléments 124 (figure 1).

Le moteur 41 est monté sur des plots de la couche 12, et logé dans la garniture 42, elle-même maintenue à l'aide d'un jonc de fixation 43, qui s'accroche à une extension 127 prévue à cet effet sur la couche 12.

L'entraînement du store peut être du type « push-pull », mettre en oeuvre une courroie ou des câbles. Comme illustré en figure 1, le tube d'enroulement peut être d'un côté du pavillon, et le moteur de l'autre côté.

L'ensemble formé par les deux couches 11 et 12 est préférentiellement rendu étanche à l'aide d'un joint et/ou d'une colle assurant l'étanchéité. Préférentiellement, des moyens de réception de ce joint sont prévus directement sur et/ou l'autre des deux couches.

Par ailleurs, on prévoit préférentiellement un système de ventilation et/ou de filtrage (avec notamment un filtre à poussière), pour éviter la condensation. Il peut notamment s'agir d'un filtre en tissu ou en papier, définissant un labyrinthe. Il peut être monté sur la couche technique, ou sur la tranche du dispositif, entre les deux couches.

De nombreuses autres fonctions techniques peuvent être intégrées de la même façon au pavillon, par moulage ou surmoulage directement sur l'une et/ou l'autre des deux couches. On obtient ainsi un pavillon pré-équipé de façon simple et efficace, et peu coûteuse. De façon non exhaustive, ces fonctions techniques peuvent comprendre :
- des moyens d'éclairage intérieur ;
- des moyens de réception d'une antenne ;
- des antennes ;
- des moyens de réception et/ou de fixation d'une barre de galerie ;
- des moyens de dégivrage et/ou de chauffage ;
- des moyens d'aide à la solidarisation des deux panneaux (moyens de centrage et/ou de fixation) ;
- des moyens d'aide à la solidarisation du dispositif au véhicule ;
- des joints d'isolation et d'étanchéité (entre les deux panneaux et entre le dispositif et le véhicule) ;
- des moyens d'isolation phonique et thermique ;
- des moyens de réception et/ou de fixation d'un élément d'étanchéité ;
- des moyens de réception et/ou de fixation de moyens de filtrage et/ou de ventilation ;
- des enjoliveurs de gouge, ou des moyens de réception de ces derniers ;
- un parcours de collage ;
- un parcours de câble ;
- des moyens de réception et/ou de fixation d'un jonc de finition ;
- un jonc de finition ;
- des capteurs, notamment de pluie, de température et/ou d'ensoleillement ;
- des moyens d'éclairage, et par exemple :
   ○ des moyens d'intégration d'un éclairage électrique ;
   ○ des moyens transmission de la lumière par la matière, tels que de la fibre optique ;
   ○ du gaz éclairant (néon, fluorescent...) ;
- des moyens d'isolation et/ou de réglage thermique et/ou acoustique, et par exemple :
   ○ écran thermique par double vitrage ;
   ○ chauffage par passage d'air chaud (pouvant être relié à la climatisation du véhicule) ;
   ○ isolant de la chaleur par passage d'air froid (pouvant être relié à la climatisation du véhicule) ;
   ○ gaz de renforcement de l'isolation ;
- des moyens d'occultation, remplaçant ou complétant les stores à enrouleur, par exemple :
   ○ gaz occultant ;
   ○ cristaux liquides ;
   ○ stores à lamelles ;
- des moyens d'ajout de fonctions, tels que des inserts de fixation pour :
   ○ des antennes ;
   ○ des ailerons ;
   ○ des déflecteurs ;
   ○ des barres de galerie ;
- des moyens de commande, par exemple de l'éclairage, de l'occultation, de la climatisation,... par exemple sous la forme d'un ensemble technique, regroupant des commandes, sous la forme d'une série d'interrupteurs ou d'une surface tactile ;
- des moyens de rangement, tels que des consoles ou des capucines ;
- des moyens essuie-glace ;
- des feux d'éclairage ;
- des moyens de réception d'une garniture intérieure dudit véhicule ;
- ...

Un certain nombre de ces fonctions peuvent notamment être obtenues, au moins en partie, par moulage, avec le cas échéant ajout de pièces métalliques ou en plastique spécial.

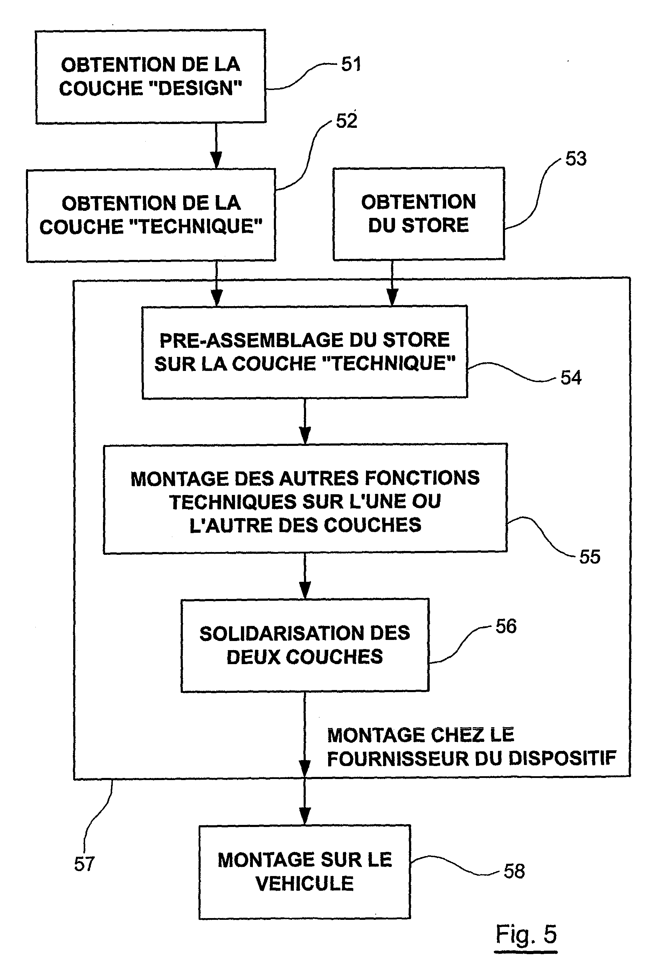

La fabrication d'un pavillon selon l'invention, et plus généralement d'une vitre de véhicule, est particulièrement simple, comme l'illustre le schéma de la figure 5. On obtient tout d'abord les deux couches (51 et 52), par moulage ou surmoulage, dans une matière plastique, telle que par exemple du polycarbonate (notamment du type LEXAN, MAKROLON ou EXATEC (marques déposées)).

Un traitement spécifique peut être appliqué à ces couches, pour y apporter un revêtement de protection pour au moins un des aspects suivants :
- les protections anti-rayures et/ou anti-chocs ;
- les protections contre les ultra-violets ;
- les protections contre le vieillissement ;
- les protections climatiques.

On réalise indépendamment le store (53), qui est classique en soi. De la même façon, on rassemblera les différents éléments nécessaires aux fonctions techniques (câble d'entraînement du store, moteur, joint, ...).

Disposant de tous ces éléments, on les assemble tout d'abord sur l'une des couches, et en particulier la couche technique. Notamment, on effectue le pré-assemblage du store 14 (étape 54).

On assure également le montage des autres fonctions techniques et des autres éléments nécessaires (étape 55).

On dispose alors de deux couches, pré-équipées. Il ne reste plus qu'à les solidariser l'une à l'autre (56). Cette solidarisation peut être effectuée par exemple par vissage, bouterollage, collage, ...

Le pavillon est alors terminé. Il peut être fourni à un constructeur.

Le montage 57 effectué chez le fournisseur du dispositif a permis de préparer un pavillon vitré complètement équipé, et il ne reste plus au constructeur automobile qu'à le monter sur le véhicule (58). Cette opération est particulièrement simple.

Il suffit de solidariser, de façon classique, les bords du pavillon au châssis. Il n'est plus nécessaire, pour le constructeur, de monter ensuite un boîtier de store puis un moteur d'entraînement de ce store, puis les câbles d'entraînement associés, puis d'effectuer les réglages et ajustements nécessaires. Les avantages sont les mêmes pour toutes les autres fonctions techniques d'ores et déjà intégrées au pavillon.

La solidarisation est faite par exemple par vissage, collage, soudage ou autre. La liaison entre les deux couches peut être rendue étanche à l'aide d'un joint encapsulé, un joint collé ou un joint de coulisse, intégré au pavillon.

La fabrication et le montage sont donc grandement simplifiés, notamment chez le constructeur, mais également chez le fournisseur du dispositif, la mise en oeuvre des différents éléments ayant été prévue dans le moule, pour être directement intégrés aux panneaux.

La technique de l'invention offre en outre de nombreux autres avantages tels que notamment :
- une amélioration esthétique, puisque l'occultant prend automatiquement le galbe de la couche technique ;
- une amélioration de l'habitabilité, cette dernière ne subissant aucune modification et notamment pas de perte de hauteur sous tête entre les positions occultée et ouverte ;
- une simplification du système d'occultation, puisqu'il n'est pas nécessaire de prévoir de système de galbage (tel que des baleines), ni de barre avant (telle qu'une barre de tirage), devant posséder une inertie suffisante pour résister à un poids suspendu, et offrir une bonne résistance à la température ;
- une protection efficace de l'occultant. En effet, celui-ci ne se trouve plus à l'intérieur de l'habitacle, mais est au contraire protégé contre les diverses détériorations potentielles dues à l'utilisateur (tâches, brûlures, ...) ;
- une amélioration de la résistance aux chocs, l'ensemble formé par les deux couches étant plus efficace du fait de sa matière et de sa double épaisseur qu'un module réalisé classiquement en verre ;
- une diminution de la masse par rapport à un pavillon en verre ;
- une réduction de l'encombrement et du poids de l'occultant, puisqu'il n'est pas nécessaire de prévoir de baleines ;
- ...

Comme déjà indiqué, on rappelle que l'invention ne se limite pas aux pavillons, mais peut également être mise en oeuvre pour toute zone vitrée inclinée et/ou verticale, telle que la lunette arrière des véhicules, les vitres latérales, les vitres de hayon, les pare-brise...

Par ailleurs, il est possible de lier plusieurs dispositifs, pour former un module d'obturation adapté à plusieurs surfaces classiquement indépendantes d'un véhicule, comme par exemple le pavillon et la lunette arrière. La figure 6 illustre, de façon simplifiée, un tel module.

Ce module d'obturation est donc prévu pour obturer simultanément un pavillon et une lunette arrière, sous la forme d'un élément unique, prêt à être rapporté sur un véhicule.

Il comprend donc un premier dispositif 61 d'obturation du pavillon, tel que décrit précédemment, et un second dispositif 62 d'obturation de la lunette arrière, conçu de la même façon. Chacun de ces dispositifs comprend donc deux panneaux parallèles, à l'intérieur desquels peuvent circuler des stores d'occultation 611 et 621. A nouveau, on note que cette approche permet d'appliquer à ces stores le galbe du dispositif correspondant.

Ces deux dispositifs 61 et 62 sont solidarisés l'un à l'autre par une traverse de structure 63, de façon à former l'ensemble monobloc. Cette traverse 63 sera ensuite, lors du montage sur le véhicule, liée à la caisse du véhicule, par exemple par soudage.

Une garniture intérieure 64 est prévue, pour dissimuler cette traverse 63, et plus généralement certains éléments tels que les logements de stores 611 et 621. Cette garniture 64 peut intégrer différentes fonctions complémentaires, telles qu'un éclairage 641, des zones de rangement 642,...

On peut en outre rapporter à ce module tout ou partie de l'habillage du pavillon.

Concernant le dispositif 62 de lunette arrière (pris indépendamment ou intégré dans un module), on également prévoir qu'il porte des moyens essuie-glace, des moyens d'éclairage (troisième feu stop par exemple),...

Cette lunette arrière peut être fixe ou ouvrante. Dans ce dernier cas, elle peut être articulée sur la traverse 63. Bien sûr, cette mobilité peut être appliquée à d'autres panneaux que la lunette arrière, sous des formes diverses (basculement, coulissement, ... ).

Il est possible que le module présente plus de deux dispositifs (certains d'entre eux pouvant être classiques, par exemple sous la forme d'un panneau de verre). Notamment, le module de la figure 6 peut être complété par un pare-brise en verre.

## Revendications

1. Dispositif d'obturation d'une ouverture pour véhicule, **caractérisé en ce qu'**il comprend deux panneaux transparents (11, 12) superposés et solidarisés l'un à l'autre, définissant un espace intérieur au moins partiellement fermé, et des moyens d'occultation mobiles (14), pouvant s'étendre dans ledit espace fermé.

2. Dispositif d'obturation selon la revendication 1, **caractérisé en ce que** lesdits panneaux (11, 12) sont galbés, et **en ce qu'**ils impriment un galbe correspondant auxdits moyens d'occultation (14), lorsque ceux-ci sont déployés.

3. Dispositif d'obturation selon l'une quelconque des revendications 1 et 2, **caractérisé en ce qu'**au moins un desdits panneaux (11, 12) intègre au moins un élément technique assurant ou participant à une fonction technique distincte de la fonction principale d'obturation.

4. Dispositif d'obturation selon la revendication 3, **caractérisé en ce qu'**au moins un desdits panneaux (11, 12) comprend des moyens de guidage desdits moyens d'occultation (14).

5. Dispositif d'obturation selon l'une quelconque des revendications 1 à 4, **caractérisé en ce qu'**il comprend des moyens de filtrage et/ou de ventilation, destinés à filtrer et/ou ventiler l'air présent dans ledit espace fermé.

6. Dispositif d'obturation selon l'une quelconque des revendications 3 à 5, **caractérisé en ce qu'**au moins un desdits éléments techniques appartient au groupe comprenant :
- des moyens de réception et/ou de fixation d'un élément d'étanchéité ;
- des moyens de réception et/ou de fixation de moyens de filtrage et/ou de ventilation ;
- des moyens de réception et/ou de fixation d'une barre de galerie, ou de moyens coopérant avec une telle barre de galerie ;
- des enjoliveurs de gouge (27) ;
- un parcours de collage (111) ;
- un parcours de câble ;
- des moyens de réception et/ou de fixation d'un jonc de finition ;
- un jonc de finition ( 15) ;
- des moyens de réception et/ou de fixation de moyens d'éclairage ;
- des moyens de réception et/ou de fixation de moyens de motorisation (13) de moyens d'occultation (14) ;
- des capteurs, notamment de pluie, de température et/ou d'ensoleillement ;
- des moyens de réception et/ou de fixation d'une antenne et/ou d'un élément de carrosserie ;
- des antennes ;
- des moyens de dégivrage et/ou de chauffage et/ou de climatisation ;
- des moyens de réception d'un gaz ou de cristaux liquides ;
- des moyens de centrage et/ou de solidarisation desdits panneaux (11, 12) ;
- des moyens d'isolation phonique et/ou thermique ;
- des moyens de centrage et/ou de solidarisation dudit dispositif audit véhicule ;
- des moyens d'étanchéité entre ledit dispositif et ledit véhicule ;
- des moyens de contrôle et de commande des éléments intégrés audit dispositif ;
- des moyens essuie-glace ;
- des feux d'éclairage ;
- des moyens de réception d'une garniture intérieure dudit véhicule.

7. Dispositif d'obturation selon l'une quelconque des revendications 1 à 6, **caractérisé en ce qu'**il porte un joint encapsulé, un joint collé et/ou un joint de coulisse.

8. Dispositif d'obturation selon l'une quelconque des revendications 1 à 7, **caractérisé en ce que** lesdits panneaux (11, 12) définissent chacun une demie-coquille, obtenue par moulage, surmoulage, thermoformage ou extrusion.

9. Dispositif d'obturation selon la revendication 8 et l'une quelconque des revendications 3 à 7, **caractérisé en ce que** le ou lesdits éléments techniques sont obtenus simultanément avec le panneau correspondant, par moulage, surmoulage, thermoformage ou extrusion, de façon que chaque panneau forme une pièce unique, intégrant le ou lesdits éléments techniques.

10. Dispositif d'obturation selon l'une quelconque des revendications 3 à 9, **caractérisé en ce qu'**au moins un desdits panneaux (11, 12) présente au moins une zone opaque et/ou de couleur, destinée à dissimuler un ou plusieurs desdits éléments techniques.

11. Dispositif d'obturation selon l'une quelconque des revendications 3 à 10, **caractérisé en ce qu'**il comprend un panneau extérieur (11) et un panneau intérieur (12), lesdits éléments techniques étant principalement associés audit panneau intérieur (12).

12. Dispositif d'obturation selon les revendications 10 et 11, **caractérisé en ce qu'**au moins une zone opaque et/ou de couleur est formée sur ledit panneau extérieur (11).

13. Dispositif d'obturation selon l'une quelconque des revendications 1 à 10, **caractérisé en ce que** lesdits panneaux (11, 12) sont réalisés en matière plastique.

14. Dispositif d'obturation selon la revendication 13, **caractérisé en ce qu'**au moins un desdits panneaux (11, 12) présente un revêtement offrant au moins une des protections appartenant au groupe comprenant :
- les protections anti-rayures et/ou anti-chocs ;
- les protections contre les ultra-violets ;
- les protections contre le vieillissement ;
- les protections climatiques.

15. Dispositif d'obturation selon l'une quelconque des revendications 1 à 14, **caractérisé en ce qu'**il est destiné à au moins l'un des éléments appartenant au groupe comprenant :
- les pavillons ;
- les vitres arrière ;
- les vitres latérales ;
- les pare-brise ;
- les hayons.

16. Dispositif d'obturation selon l'une quelconque des revendications 1 à 15, **caractérisé en ce qu'**il comprend des moyens permettant un déplacement par rapport au châssis dudit véhicule.

17. Dispositif d'obturation selon la revendication 16, **caractérisé en ce que** lesdits moyens permettant un déplacement comprennent au moins une charnière.

18. Module d'obturation pour véhicule, **caractérisé en ce qu'**il comprend au moins deux dispositifs d'obturation selon l'une quelconque des revendications 1 à 17, liés l'un à l'autre par au moins un élément de structure.

19. Module d'obturation selon la revendication 18, **caractérisé en ce qu'**au moins un desdits éléments de structure comprend des moyens de liaison au châssis dudit véhicule.

20. Module d'obturation selon l'une quelconque des revendications 18 et 19, **caractérisé en ce que** l'un premier desdits dispositifs correspond à un pavillon et un second desdits dispositifs correspond à une lunette arrière.

21. Module d'obturation selon l'une quelconque des revendications 18 à 20, **caractérisé en ce que** chacun desdits dispositifs d'obturation comprend des moyens d'occultation (14).

22. Module d'obturation selon l'une quelconque des revendications 18 à 21, **caractérisé en ce qu'**il comprend un pare-brise.

23. Module d'obturation selon l'une quelconque des revendications 18 à 22, **caractérisé en ce qu'**il comprend une garniture intérieure, recouvrant au moins partiellement une zone de liaison entre lesdits dispositifs d'obturation.

24. Module d'obturation selon la revendication 23, **caractérisé en ce que** ladite garniture recouvre les logements de deux stores d'occultation, associés respectivement à deux desdits dispositifs d'obturation.

25. Module d'obturation selon l'une quelconque des revendications 23 et 24, **caractérisé en ce que** ladite garniture intérieure intègre au moins une fonction supplémentaire.

26. Module d'obturation selon la revendication 25, **caractérisé en ce que** la ou lesdites fonctions supplémentaires appartiennent au groupe comprenant :
- un éclairage intérieur ;
- un ou plusieurs rangements.

27. Procédé de fabrication d'un dispositif ou d'un module d'obturation d'une ouverture ménagée dans un véhicule, **caractérisé en ce qu'**il comprend les étapes suivantes :
- obtention de deux panneaux (51, 52) ;
- obtention de moyens mobiles d'occultation (53) ;
- solidarisation desdits moyens mobiles d'occultation à au moins un desdits panneaux (54) ;
- superposition et solidarisation desdits panneaux, pour former ledit dispositif d'obturation, lesdits panneaux définissant un espace au moins partiellement fermé (56).

28. Procédé de fabrication selon la revendication 27, **caractérisé en ce que** lesdits panneaux (11, 12) sont obtenus par moulage, surmoulage, thermoformage ou extrusion.

29. Procédé de fabrication selon l'une quelconque des revendications 27 et 28, **caractérisé en ce que** lesdits panneaux (11, 12) sont galbés, et **en ce qu'**ils impriment un galbe correspondant auxdits moyens d'occultation (14), lorsque ceux-ci sont déployés.

30. Procédé de fabrication selon l'une quelconque des revendications 27 à 29, **caractérisé en ce que** ladite étape d'obtention comprend l'intégration d'au moins un élément technique assurant ou participant à une fonction technique distincte de la fonction principale d'obturation.

31. Procédé de fabrication selon la revendication 30, **caractérisé en ce que** le ou lesdits éléments techniques comprennent des moyens de filtrage et/ou de ventilation.

32. Procédé de fabrication selon l'une quelconque des revendications 30 et 31, **caractérisé en ce qu'**il comprend une étape de pré-assemblage d'au moins un desdits éléments techniques sur au moins un desdits panneaux (11, 12), avant ladite étape de superposition et solidarisation.

33. Procédé de fabrication selon l'une quelconque des revendications 27 à 32, **caractérisé en ce que** ladite solidarisation est réalisée par bouterollage, rivetage, soudure, vissage et/ou collage.

34. Procédé de fabrication selon l'une quelconque des revendications 27 à 33, **caractérisé en ce que** ledit dispositif d'obturation est rapporté sur ledit véhicule et solidarisé à celui-ci sous la forme d'une pièce unique pré-équipée.

35. Procédé de fabrication selon la revendication 34, **caractérisé en ce que** la solidarisation audit véhicule est étanche, par l'intermédiaire de colle et/ou d'au moins un joint d'étanchéité solidaire dudit dispositif d'obturation.

36. Procédé de fabrication selon l'une quelconque des revendications 34 et 35, **caractérisé en ce que** la solidarisation audit véhicule se fait par vissage, collage et/ou soudage.

37. Procédé de fabrication d'un module d'obturation selon l'une quelconque des revendications 27 à 36, **caractérisé en ce que** ledit module d'obturation comprend au moins deux dispositifs d'obturation, et **en ce que** ledit procédé comprend une étape d'assemblage desdits dispositifs d'obturation, à l'aide de moyens de liaison.

38. Procédé de fabrication selon la revendication 37, **caractérisé en ce qu'**au moins l'un desdits dispositifs d'obturation est monté mobile par rapport auxdits moyens de liaison.

39. Véhicule automobile **caractérisé en ce qu'**il comprend au moins un dispositif ou module d'obturation d'une baie ménagée dans un véhicule, **caractérisé en ce que** le ou lesdits dispositifs d'obturation comprennent deux panneaux (11, 12) superposés et solidarisés l'un à l'autre, définissant un espace intérieur au moins partiellement fermé, et des moyens d'occultation (14) mobiles, pouvant s'étendre dans ledit espace fermé.
